# EUROPEAN PATENT APPLICATION

(11) **EP 4 040 405 A2**
(43) Date of publication of application: **10.08.2022**
(21) Application number: 22179224.5
(22) Date of filing: 15.06.2022
(51) Int. Cl.: G06V 40/18

(54) **METHOD AND APPARATUS FOR TRACKING SIGHT LINE, DEVICE, STORAGE MEDIUM, AND COMPUTER PROGRAM PRODUCT**

(30) Priority: 25.06.2021 CN 202110709957
(71) Applicant: Apollo Intelligent Connectivity (Beijing) Technology Co., Ltd., Beijing 100176 (CN)
(72) Inventor: DENG, Sunan, Beijing, 100176 (CN)
(74) Representative: Lucke, Andreas

(57) **Abstract**

The present disclosure provides a method for tracking a sight line, an apparatus for tracking a sight line, a device, a storage medium, and a computer program product, relates to the technical field of artificial intelligence, and specifically relates to the technical fields of intelligent transport and deep learning. A specific embodiment of the method includes: acquiring a first image, where the first image is an image of an eyeball state of a driver; and determining, based on a pre-trained sight line calibrating model, a gaze area in a world coordinate system, the gaze area corresponding to the first image. This embodiment can determine the corresponding area in the world coordinate system based on the image of the eyeball state of the driver, thereby realizing the calibration of the sight line of the driver.

## Description

### TECHNICAL FIELD

The present disclosure relates to the field of computers, and specifically to the field of artificial intelligence such as intelligent transport and deep learning, and more specifically to a method for tracking a sight line, an apparatus for tracking a sight line, a device, a storage medium, and a computer program product.

### BACKGROUND

Tracking sight lines of human eyes, as an important and fundamental problem in the fields of computer vision and computer graphics, has a very wide range of applications in the fields, such as human-machine interaction, virtual reality, and augmented reality. For example, in computer vision, points at which human eyes look on a screen may be used to complete various human-machine interaction functions; and in augmented reality, directions of sight lines may be used to adjust the displayed contents to produce a better sense of reality. It is exactly because eyes can express abundant emotions of human beings, the researches on tracking of sight lines of human eyes have extremely high scientific research and application values. In the fields of computer graphics and computer vision, high-precision tracking of directions of sight lines has always been an important and challenging problem.

### SUMMARY

The present disclosure provides a method for tracking a sight line, an apparatus for tracking a sight line, a device, a storage medium, and a computer program product.

According to a first aspect of the present disclosure, a method for tracking a sight line is provided, including: acquiring a first image, where the first image is an image of an eyeball state of a driver; and determining, based on a pre-trained sight line calibrating model, a gaze area in a world coordinate system, the gaze area corresponding to the first image.

According to a second aspect of the present disclosure, a method for training a model is provided, including: acquiring a training sample set, where a training sample in the training sample set includes an image of an eyeball state of a driver when the driver looks at a label point, and position information of the label point; and using the image of the eyeball state as an input, and using the position information as an output, to obtain a sight line calibrating model by training.

According to a third aspect of the present disclosure, an apparatus for tracking a sight line is provided, including: a first acquiring module configured to acquire a first image, where the first image is an image of an eyeball state of a driver; and a first determining module configured to determine, based on a pre-trained sight line calibrating model, a gaze area in a world coordinate system, the gaze area corresponding to the first image.

According to a fourth aspect of the present disclosure, an apparatus for training a model is provided, including: a fifth acquiring module configured to acquire a training sample set, where a training sample in the training sample set includes an image of an eyeball state of a driver when the driver looks at a label point, and position information of the label point; and a training module configured to use the image of the eyeball state as an input, and use the position information as an output, to obtain a sight line calibrating model by training.

According to a fifth aspect of the present disclosure, an electronic device is provided, including: at least one processor; and a memory communicatively connected to the at least one processor; where the memory stores instructions executable by the at least one processor, and the instructions, when executed by the at least one processor, cause the at least one processor can execute the method according to any one implementation in the first aspect.

According to a sixth aspect of the present disclosure, a non-transitory computer-readable storage medium storing computer instructions is provided, where the computer instructions are used for causing a computer to execute the method according to any one implementation in the first aspect or the second aspect.

According to a seventh aspect of the present disclosure, a computer program product is provided, including a computer program, where the computer program, when executed by a processor, implements the method according to any one implementation in the first aspect or the second aspect.

It should be understood that contents described in the SUMMARY are neither intended to identify key or important features of embodiments of the present disclosure, nor intended to limit the scope of the present disclosure. Other features of the present disclosure will become readily understood in conjunction with the following description.

### BRIEF DESCRIPTION OF THE DRAWINGS

The accompanying drawings are used for better understanding of the present solution, and do not constitute a limitation of the present disclosure. In the figures:
Fig. 1 is a diagram of an example system architecture in which embodiments of the present disclosure may be implemented;
Fig. 2 is a flowchart of an embodiment of a method for tracking a sight line according to the present disclosure;
Fig. 3 is a flowchart of another embodiment of the method for tracking a sight line according to the present disclosure;
Fig. 4 is a flowchart of still another embodiment of the method for tracking a sight line according to the present disclosure;
Fig. 5 is a flowchart of an embodiment of a method for training a model according to the present disclosure;
Fig. 6 is a schematic structural diagram of an embodiment of an apparatus for tracking a sight line according to the present disclosure;
Fig. 7 is a flowchart of an embodiment of an apparatus for training a model according to the present disclosure; and
Fig. 8 is a block diagram of an electronic device configured to implement the method for tracking a sight line according to embodiments of the present disclosure.

### DETAILED DESCRIPTION OF EMBODIMENTS

Example embodiments of the present disclosure are described below with reference to the accompanying drawings, where various details of the embodiments of the present disclosure are included to facilitate understanding, and should be considered merely as examples. Therefore, those of ordinary skills in the art should realize that various changes and modifications can be made to the embodiments described here without departing from the scope and spirit of the present disclosure. Similarly, for clearness and conciseness, descriptions of well-known functions and structures are omitted in the following description.

It should be noted that some embodiments in the present disclosure and some features in the embodiments may be combined with each other on a non-conflict basis. The present disclosure will be described in detail below with reference to the accompanying drawings and in combination with the embodiments.

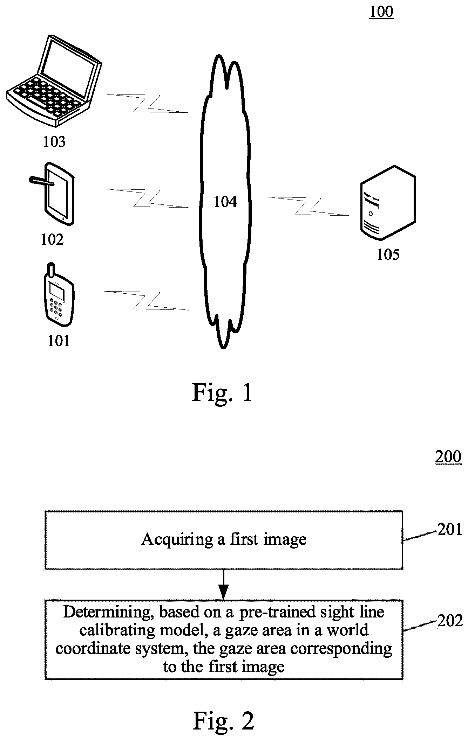

Fig. 1 shows an example system architecture 100 in which embodiments of a method for tracking a sight line or an apparatus for tracking a sight line according to the present disclosure may be implemented.

As shown in Fig. 1, the system architecture 100 may include terminal devices 101, 102, and 103, a network 104, and a server 105. The network 104 serves as a medium providing a communication link between the terminal devices 101, 102, and 103, and the server 105. The network 104 may include various types of connections, such as wired or wireless communication links, or optical cables.

A user may interact with the server 105 using the terminal devices 101, 102, and 103 via the network 104, for example, to receive or send information. The terminal devices 101, 102, and 103 may be provided with various client applications,

The terminal devices 101, 102, and 103 may be hardware, or may be software. When the terminal devices 101, 102, and 103 are hardware, the terminal devices may be various electronic devices, including but not limited to a smart phone, a tablet computer, a laptop portable computer, a desktop computer, and the like. When the terminal devices 101, 102, and 103 are software, the terminal devices may be installed in the above electronic devices, or may be implemented as a plurality of software programs or software modules, or may be implemented as a single software program or software module. This is not specifically limited here.

The server 105 may provide various services. For example, the server 105 may analyze and process a first image acquired from the terminal devices 101, 102, and 103, and generate a processing result (e.g., a gaze area).

It should be noted that the server 105 may be hardware, or may be software. When the server 105 is hardware, the server may be implemented as a distributed server cluster composed of a plurality of servers, or may be implemented as a single server. When the server 105 is software, the server may be implemented as a plurality of software programs or software modules (e.g., software programs or software modules for providing distributed services), or may be implemented as a single software program or software module. This is not specifically limited here.

It should be noted that the method for tracking a sight line according to embodiments of the present disclosure is generally executed by the server 105. Accordingly, the apparatus for tracking a sight line is generally provided in the server 105.

It should be understood that the numbers of the terminal devices, network, and server in Fig. 1 are merely illustrative. Any number of terminal devices, networks, and servers may be provided based on actual requirements.

Further referring to Fig. 2, a process 200 of an embodiment of a method for tracking a sight line according to the present disclosure is shown. The method for tracking a sight line includes the following steps:

Step 201: acquiring a first image.

In the present embodiment, an executing body (e.g., the server 105 shown in Fig. 1) of the method for tracking a sight line may acquire the first image, where the first image is an image of an eyeball state of a driver.

The first image may be acquired by an image sensor in a vehicle of the driver. The image sensor in the present embodiment is a camera sensor (hereinafter referred to as a camera), or may be other image sensors according to actual situations. This is not limited in the present disclosure. The camera may take an image of an eyeball state of the driver in real time.

Step 202: determining, based on a pre-trained sight line calibrating model, a gaze area in a world coordinate system, the gaze area corresponding to the first image.

In the present embodiment, the executing body may determine, based on the pre-trained sight line calibrating model, the gaze area in the world coordinate system, the gaze area corresponding to the first image. The sight line calibrating model may be a pre-trained model, and the first image representing the eyeball state of the driver is inputted into the pre-trained sight line calibrating model to determine a gaze direction of the driver corresponding to the first image, and then based on the determined gaze direction, the gaze area corresponding to the first image in the world coordinate system is determined, where the gaze area is a to-be-finally-determined area of interest of the driver, thereby realizing the tracking of the sight line of the driver.

It should be noted that the world coordinate system is an absolute coordinate system of a system. Before a user coordinate system is established, respective positions of coordinates of all points on a screen are determined based on the origin of the word coordinate system.

A method for tracking a sight line provided in embodiments of the present disclosure includes first acquiring a first image representing an eyeball state of a driver; and then determining, based on a pre-trained sight line calibrating model, a gaze area in a world coordinate system, the gaze area corresponding to the first image. The present disclosure provides a method for tracking a sight line, which can calibrate a sight line of a driver based on a pre-trained sight line calibrating model, thereby realizing tracking of an object in the sight line of the driver, and improving the accuracy of tracking the sight line.

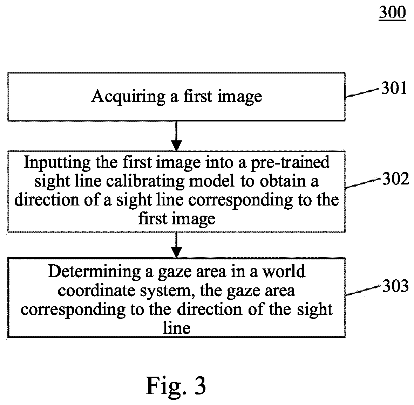

Further referring to Fig. 3, Fig. 3 shows a process 300 of another embodiment of the method for tracking a sight line according to the present disclosure. The method for tracking a sight line includes the following steps:
Step 301: acquiring a first image.

Step 301 is substantially consistent with step 201 in the above embodiments, and a specific implementation of step 301 may be referred to the above description of step 201, and is not repeated here.

Step 302: inputting the first image into a pre-trained sight line calibrating model to obtain a direction of a sight line corresponding to the first image.

In the present embodiment, an executing body (e.g., the server 105 shown in Fig. 1) of the method for tracking a sight line may input the first image into the pre-trained sight line calibrating model, thereby obtaining the direction of the sight line corresponding to the first image.

When a driver looks at different buildings on both sides of a road, the directions of the sight lines of the driver are different, and corresponding eyeball orientation information is also different. Therefore, in the present embodiment, the first image representing the eyeball state of the driver is inputted into the pre-trained sight line calibrating model, thereby obtaining the direction of the sight line corresponding to the first image, and then determining the direction of the sight line of the driver at this time.

Step 303: determining a gaze area in a world coordinate system, the gaze area corresponding to the direction of the sight line.

In the present embodiment, the executing body may determine the gaze area in the world coordinate system, the gaze area corresponding to the direction of the sight line. The world coordinate system is a coordinate system in the real world. After the direction of the sight line of the driver is determined, the gaze area in a real coordinate system may be determined based on the direction of the sight line, and the gaze area corresponds to the direction of the sight line. For example, when the direction of the sight line of the driver is determined to be the left front direction, an area corresponding to the left front left direction in the world coordinate system may be determined to be the gaze area of the driver.

As can be seen from Fig. 3, compared with the corresponding embodiment of Fig. 2, the method for tracking a sight line in the present embodiment highlights the steps of training a sight line calibrating model, determining a direction of a sight line corresponding to a first image based on the sight line calibrating model, and then determining a gaze area corresponding to the direction of the sight line in a world coordinate system. This method improves the accuracy of the sight line calibration and has a wider range of applications.

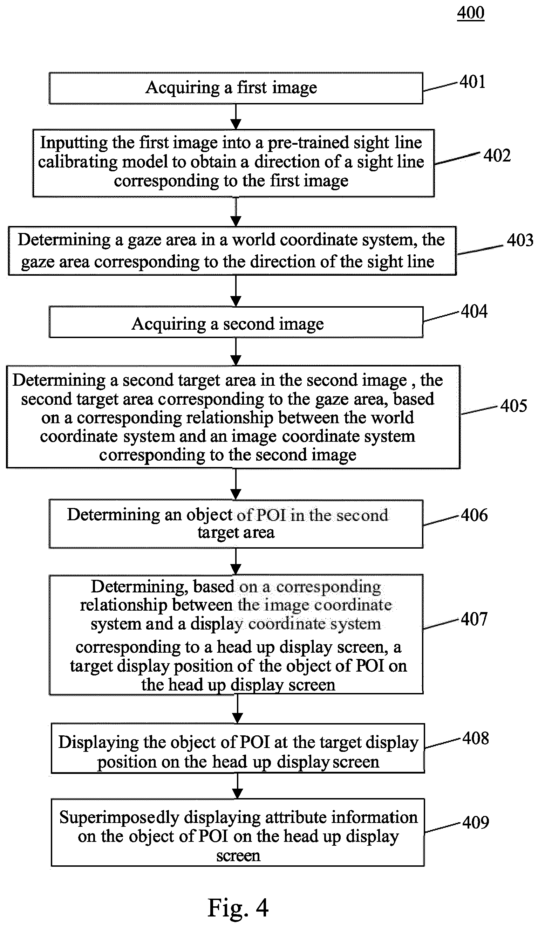

Further referring to Fig. 4, Fig. 4 shows a process 400 of still another embodiment of the method for tracking a sight line according to the present disclosure. The method for tracking a sight line includes the following steps:
Step 401: acquiring a first image.

Step 402: inputting the first image into a pre-trained sight line calibrating model to obtain a direction of a sight line corresponding to the first image.

Step 403: determining a gaze area in a world coordinate system, the gaze area corresponding to the direction of the sight line.

Steps 401 to 403 are substantially consistent with steps 301 to 303 in the above embodiments, and specific implementations of steps 401 to 403 may be referred to the above description of steps 301 to 303, and are not repeated here.

Step 404: acquiring a second image.

In the present embodiment, an executing body (e.g., the server 105 shown in Fig. 1) of the method for tracking a sight line may acquire the second image, where the second image is an image of a surrounding environment of a vehicle of a driver.

The second image may be collected by another camera in the vehicle of the driver, i.e., two cameras may be installed within the vehicle of the driver, one of the cameras may internally collect the image of the eyeball state of the driver, and the other camera may collect the image of the surrounding environment of the vehicle of the driver. Of course, other number of cameras may alternatively be provided according to the actual situations. This is not specifically limited in the present disclosure.

The second image may contain buildings on both sides of a road on which the vehicle is traveling, and may also contain, e.g., obstacles.

Step 405: determining a second target area in the second image, the second target area corresponding to the gaze area based on a corresponding relationship between the world coordinate system and an image coordinate system corresponding to the second image.

In the present embodiment, the executing body may determine the second target area in the second image, the second target area corresponding to the gaze area, based on the corresponding relationship between the world coordinate system and the image coordinate system corresponding to the second image.

Since the second image is an image of an object in a real environment, the second image corresponds to the world coordinate system. There is also an image coordinate system in the second image, such that the second target area in the second image, the second target area corresponding to the gaze area, may be determined based on the corresponding relationship between the world coordinate system and the image coordinate system corresponding to the second image. The second target area is an area in the second image, the area corresponding to the direction of the sight line of the driver.

It should be noted that a digital image collected by the camera may be stored as an array in a computer, and the value of each element (pixel) in the array is brightness (grayscale) of the image point. A rectangular coordinate system u-v is defined on the image, and coordinates (u, v) of each pixel are the row number and line number of each pixel in the array. Therefore, (u, v) are the coordinates of the image coordinate system in a unit of a pixel.

Step 406: determining an object of POI in the second target area.

In the present embodiment, the executing body may determine the object of POI (point of interest) in the second target area. Since the second target area is an area in the second image, the area corresponding to the direction of the sight line of the driver, the second target area is an area at which the driver looks. Then, a target object in the second area is the object of POI in the present embodiment, i.e., an object at which the driver looks. Therefore, the executing body may determine the object of POI in the second target area.

In some alternative implementations of the present embodiment, the method for tracking a sight line further includes: acquiring information of a current position of the vehicle; and acquiring attribute information of the object of POI based on the information of the current position.

In the present implementation, the executing body may acquire the information of the current position of the vehicle. The information of the current position may be obtained by a GPS (global positioning system) of the vehicle, or by an IMU (inertial measurement unit) sensor of the vehicle. This is not specifically limited in the present disclosure. Current geographic position information may be coordinates of the current position in the world coordinate system.

After the information of the current position of the vehicle is acquired, the attribute information of the object of POI is acquired based on the acquired information of the current position. For example, the attribute information of the object of POI may be acquired from a map based on the coordinates of the current position. The attribute information may include, e.g., name and category information of the object of POI. For example, when the object of POI is a shopping mall, its attribute information may include information, such as a name of the shopping mall, promotion activities of stores in the shopping mall, and discount information of activities. Since the object of POI is an object in which the driver is interested, in the present embodiment, the attribute information of the object of POI may alternatively be acquired, so as to feed back more comprehensive information to the driver.

Step 407: determining, based on a corresponding relationship between the image coordinate system and a display coordinate system corresponding to a head up display screen, a target display position of the object of POI on the head up display screen.

In the present embodiment, the executing body may determine, based on the corresponding relationship between the image coordinate system and the display coordinate system corresponding to the head up display screen, the target display position of the object of POI on the head up display screen.

In the present embodiment, the head up display screen is projected by a head up display device, and there is also a corresponding display coordinate system in the head up display screen. Since the object of POI is an object in the second image, and there is also a corresponding relationship between the display coordinate system and the image coordinate system corresponding to the second image, the executing body may determine the target display position of the object of POI on the head up display screen based on the corresponding relationship between the display coordinate system and the image coordinate system, and display the object of POI at the target display position.

Step 408: displaying the object of POI at the target display position on the head up display screen.

In the present embodiment, the executing body may display the object of POI at the target display position on the head up display screen, and superimposedly display the attribute information on the object of POI on the head up display picture. Since the target display position should correspond to position information of the object of POI in reality (i.e., the position information in the second image), after the target display position of the object of POI is determined, the head up display device may project the POI onto the target display position, thereby more intuitively and accurately displaying the object of POI to the driver.

Step 409: superimposedly displaying attribute information on the object of POI on the head up display screen.

In the present embodiment, the executing body may superimposedly display the attribute information of the object of POI on the object of POI, thereby exactly fusing the attribute information with a real building, and achieving the effect of augmented reality. As an example, when the object of POI is a shopping mall, the executing body may render the shopping mall at the target display position, and superimposedly display, e.g., the name of the shopping mall and activity information in the shopping mall on the object of POI.

As can be seen from Fig. 4, compared with the corresponding embodiment of Fig. 3, the method for tracking a sight line in the present embodiment further: acquires a second image, determines a second target area in the second image, the second target area corresponding to a gaze area based on a corresponding relationship between a world coordinate system and an image coordinate system corresponding to the second image, and then determines an object of POI in the second target area; then acquires information of a current position of a vehicle, and acquires attribute information of the object of POI based on the information of the current position; and finally determines, based on a corresponding relationship between the image coordinate system and a display coordinate system corresponding to a head up display screen, a target display position of the object of POI on the head up display screen, displays the object of POI at the target display position on the head up display screen, and superimposedly displays the attribute information on the object of POI on the head up display screen, thereby positioning and tracking the object based on a sight line of a driver, and exactly fusing the attribute information of the object with a real building, thus achieving the effect of augmented reality.

In the technical solution of the present disclosure, the acquisition, storage, and application of personal information of a user involved are in conformity with relevant laws and regulations, and does not violate public order and good customs.

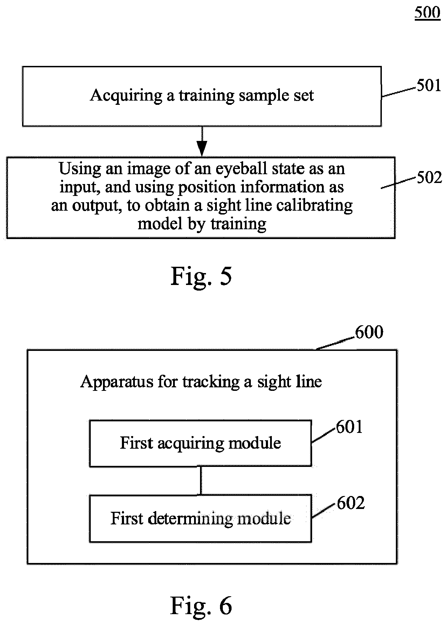

Further referring to Fig. 5, a process 500 of an embodiment of a method for training a model according to the present disclosure is shown. The method for training a model includes the following steps:
Step 501: acquiring a training sample set.

In the present embodiment, an executing body (e.g., the server 105 shown in Fig. 1) of the method for training a model may acquire the training sample set, where a training sample in the training sample set includes an image of an eyeball state of a driver when the driver looks at a label point, and position information of the label point.

In the present embodiment, when acquiring the training sample set, a calibration plate may be provided, and the calibration plate may be presented on a head up display screen projected by a head up display device, where the calibration plate may be divided into different areas in advance, each area has corresponding position information, and a resolution of the calibration plate should be consistent with a resolution of the head up display device. For example, the resolutions of the calibration plate and the head up display device are 854^{∗}480. In addition, the calibration plate may alternatively be a checkerboard. This is not specifically limited in the present embodiment.

Then, an experimenter may be asked to sit at the driver's seat (or, the driver may alternatively perform the experiment directly) with his eyes looking at different data on the calibration plate, i.e., looking at different areas on the calibration target, to collect images of eyeball states of the experimenter while the experimenter looks at different areas, thereby obtaining a training sample set for training a sight line calibrating model. The training sample set includes the images of the eyeball states of the driver when the driver looks at label points, and the position information of the label points, where the position information of the label points may be manually labeled, for example, the position information is labeled as five lines and three rows.

Step 502: using the image of the eyeball state as an input, and using the position information as an output, to obtain a sight line calibrating model by training.

In the present embodiment, the executing body may use the image of the eyeball state as the input, and use the position information as the output, to obtain the sight line calibrating model by training.

After acquiring the training sample set, the training sample set is inputted into a deep learning model to train the deep learning model, thereby obtaining a trained sight line calibrating model. An input of the sight line calibrating model is an image of an eyeball state of the driver, and an output of the sight line calibrating model is position information corresponding to the image of the eyeball state of the driver. An existing model may be used as the deep learning model. This is not specifically limited in the present disclosure.

The method for training a model provided in an embodiment of the present disclosure first acquires a training sample set; and then uses images of eyeball states as input, and uses position information as output, to obtain a sight line calibrating model by training. The present disclosure provides a method for training a model. The method can obtain a sight line calibrating model by training, such that the sight line calibration result is more accurate.

Further referring to Fig. 6, as an implementation of the method shown in the above figures, an embodiment of the present disclosure provides an apparatus for tracking a sight line. The embodiment of the apparatus corresponds to the embodiment of the method shown in Fig. 2, and the apparatus may be specifically applied to various electronic devices.

As shown in Fig. 6, the apparatus 600 for tracking a sight line of the present embodiment may include: a first acquiring module 601 and a first determining module 602. The first acquiring module 601 is configured to acquire a first image, where the first image is an image of an eyeball state of a driver; and the first determining module 602 is configured to determine, based on a pre-trained sight line calibrating model, a gaze area in a world coordinate system, the gaze area corresponding to the first image.

In the present embodiment, specific processing of the first acquiring module 601 and the first determining module 602 of the apparatus 600 for tracking a sight line and the technical effects thereof may be referred to the related description of steps 201 to 202 in the corresponding embodiment of Fig. 2, respectively, and are not repeated here.

In some alternative implementations of the present embodiment, the first determining module includes: an input submodule configured to input the first image into the pre-trained sight line calibrating model to obtain a direction of a sight line corresponding to the first image; and a determining submodule configured to determine the gaze area in the world coordinate system, the gaze area corresponding to the direction of the sight line.

In some alternative implementations of the present embodiment, the apparatus for tracking a sight line further includes: a second acquiring module configured to acquire a second image, where the second image is an image of a surrounding environment of a vehicle of the driver; and a second determining module configured to determine a second target area in the second image, the second target area corresponding to the gaze area, based on a corresponding relationship between the world coordinate system and an image coordinate system corresponding to the second image.

In some alternative implementations of the present embodiment, the apparatus for tracking a sight line further includes: a third determining module configured to determine an object of point of interest (POI) in the second target area; and a fourth determining module configured to determine, based on a corresponding relationship between the image coordinate system and a display coordinate system corresponding to a head up display screen, a target display position of the object of POI on the head up display screen.

In some alternative implementations of the present embodiment, the apparatus for tracking a sight line further includes: a third acquiring module configured to acquire information of a current position of the vehicle; a fourth acquiring module configured to acquire attribute information of the object of POI based on the information of the current position; and a display module configured to superimposedly display the attribute information on the object of POI on the head up display screen.

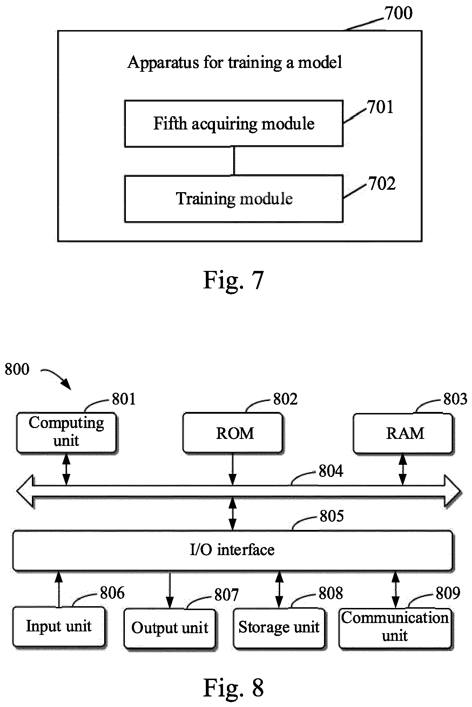

Further referring to Fig. 7, as an implementation of the method shown in the above figures, an embodiment of the present disclosure provides an apparatus for training a model. The embodiment of the apparatus corresponds to the embodiment of the method shown in Fig. 5, and the apparatus may be specifically applied to various electronic devices.

As shown in Fig. 7, the apparatus 700 for training a model of the present embodiment may include: a fifth acquiring module 701 and a training module 702. The fifth acquiring module 701 is configured to acquire a training sample set, where a training sample in the training sample set includes an image of an eyeball state of a driver when the driver looks at a label point, and position information of the label point; and the training module 702 is configured to use the image of the eyeball state as an input, and use the position information as an output, to obtain a sight line calibrating model by training.

In the present embodiment, specific processing of the fifth acquiring module 701 and the training module 702 of the apparatus 700 for training a model and the technical effects thereof may be referred to the related description of steps 501 to 502 in the corresponding embodiment of Fig. 5, respectively, and are not repeated here.

According to an embodiment of the present disclosure, the present disclosure further provides an electronic device, a readable storage medium, and a computer program product.

Fig. 8 shows a schematic block diagram of an example electronic device 800 that may be configured to implement embodiments of the present disclosure. The electronic device is intended to represent various forms of digital computers, such as a laptop computer, a desktop computer, a workbench, a personal digital assistant, a server, a blade server, a mainframe computer, and other suitable computers. The electronic device may alternatively represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

As shown in Fig. 8, the device 800 includes a computing unit 801, which may execute various appropriate actions and processes in accordance with a computer program stored in a read-only memory (ROM) 802 or a computer program loaded into a random access memory (RAM) 803 from a storage unit 808. The RAM 803 may further store various programs and data required by operations of the device 800. The computing unit 801, the ROM 802, and the RAM 803 are connected to each other through a bus 804. An input/output (I/O) interface 805 is also connected to the bus 804.

A plurality of components in the device 800 is connected to the I/O interface 805, including: an input unit 806, such as a keyboard and a mouse; an output unit 807, such as various types of sight line trackers and speakers; a storage unit 808, such as a magnetic disk and an optical disk; and a communication unit 809, such as a network card, a modem, and a wireless communication transceiver. The communication unit 809 allows the device 800 to exchange information/data with other devices through a computer network such as the Internet and/or various telecommunication networks.

The computing unit 801 may be various general purpose and/or specific purpose processing components having a processing capability and a computing capability. Some examples of the computing unit 801 include, but are not limited to, a central processing unit (CPU), a graphics processing unit (GPU), various special purpose artificial intelligence (AI) computing chips, various computing units running a machine learning model algorithm, a digital signal processor (DSP), and any appropriate processor, controller, micro-controller, and the like. The computing unit 801 executes various methods and processes described above, such as the method for tracking a sight line. For example, in some embodiments, the method for tracking a sight line maybe implemented in a computer software program that is tangibly included in a machine readable medium, such as the storage unit 808. In some embodiments, some or all of the computer programs may be loaded and/or installed onto the device 800 via the ROM 802 and/or the communication unit 809. When the computer program is loaded into the RAM 803 and executed by the computing unit 801, one or more steps of the method for tracking a sight line described above may be executed. Alternatively, in other embodiments, the computing unit 801 may be configured to execute the method for tracking a sight line by any other appropriate approach (e.g., by means of firmware).

Various implementations of the systems and technologies described above herein may be implemented in a digital electronic circuit system, an integrated circuit system, a field programmable gate array (FPGA), an application specific integrated circuit (ASIC), an application specific standard product (ASSP), a system on a chip (SOC), a complex programmable logic device (CPLD), computer hardware, firmware, software, and/or a combination thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input apparatus and at least one output apparatus, and send the data and instructions to the storage system, the at least one input apparatus and the at least one output apparatus.

Program code for implementing the method of the present disclosure may be compiled using one or any combination of more programming languages. The program code may be provided to a processor or controller of a general purpose computer, a specific purpose computer, or other programmable apparatuses for tracking a slight line, such that the program code, when executed by the processor or controller, causes the functions/operations specified in the flowcharts and/or block diagrams to be implemented. The program code may be completely executed on a machine, partially executed on a machine, partially executed on a machine and partially executed on a remote machine as a separate software package, or completely executed on a remote machine or server.

In the context of the present disclosure, a machine readable medium may be a tangible medium which may contain or store a program for use by, or used in combination with, an instruction execution system, apparatus or device. The machine readable medium may be a machine readable signal medium or a machine readable storage medium. The computer readable medium may include, but is not limited to, electronic, magnetic, optical, electromagnetic, infrared, or semiconductor systems, apparatuses, or devices, or any appropriate combination of the above. A more specific example of the machine readable storage medium will include an electrical connection based on one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any appropriate combination of the above.

To provide interaction with a user, the systems and technologies described herein may be implemented on a computer that is provided with: an apparatus for tracking a slight line (e.g., a CRT (cathode ray tube) or an LCD (liquid crystal display) monitor) configured to provide sight line tracking information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or tactile feedback); and an input may be received from the user in any form (including an acoustic input, a voice input, or a tactile input).

The systems and technologies described herein may be implemented in a computing system that includes a back-end component (e.g., as a data server), or a computing system that includes a middleware component (e.g., an application server), or a computing system that includes a front-end component (e.g., a user computer with a graphical user interface or a web browser through which the user can interact with an implementation of the systems and technologies described herein), or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and generally interact with each other through a communication network. The relationship between the client and the server is generated by virtue of computer programs that run on corresponding computers and have a client-server relationship with each other. The server may be a cloud server, a distributed system server, or a server combined with a blockchain.

It should be understood that the various forms of processes shown above may be used to reorder, add, or delete steps. For example, the steps disclosed in the present disclosure may be executed in parallel, sequentially, or in different orders, as long as the desired results of the technical solutions disclosed in the present disclosure can be achieved. This is not limited herein.

The above specific implementations do not constitute any limitation to the scope of protection of the present disclosure. It should be understood by those skilled in the art that various modifications, combinations, sub-combinations, and replacements may be made according to the design requirements and other factors. Any modification, equivalent replacement, improvement, and the like made within the spirit and principle of the present disclosure should be encompassed within the scope of protection of the present disclosure.

## Claims

1. A method for tracking a sight line, comprising:
acquiring (201) a first image, wherein the first image is an image of an eyeball state of a driver; and
determining (202), based on a pre-trained sight line calibrating model, a gaze area in a world coordinate system, the gaze area corresponding to the first image.

2. The method according to claim 1, wherein the determining, based on the pre-trained sight line calibrating model, the gaze area in the world coordinate system, the gaze area corresponding to the first image comprises:
inputting (302) the first image into the pre-trained sight line calibrating model to obtain a direction of a sight line corresponding to the first image; and
determining (303) the gaze area in the world coordinate system, the gaze area corresponding to the direction of the sight line.

3. The method according to any one of claims 1 to 2, wherein the method further comprises:
acquiring (404) a second image, wherein the second image is an image of a surrounding environment of a vehicle of the driver; and
determining (405) a second target area in the second image, the second target area corresponding to the gaze area, based on a corresponding relationship between the world coordinate system and an image coordinate system corresponding to the second image.

4. The method according to claim 3, wherein the method further comprises:
determining (406) an object of point of interest (POI) in the second target area; and
determining (407), based on a corresponding relationship between the image coordinate system and a display coordinate system corresponding to a head up display screen, a target display position of the object of POI on the head up display screen.

5. The method according to claim 4, wherein after the determining the object of point of interest (POI) in the second target area, the method further comprises:
acquiring information of a current position of the vehicle;
acquiring attribute information of the object of POI based on the information of the current position; and
superimposedly (409) displaying the attribute information on the object of POI on the head up display screen.

6. A method for training a model, comprising:
acquiring (501) a training sample set, wherein a training sample in the training sample set comprises an image of an eyeball state of a driver when the driver looks at a label point, and position information of the label point; and
using (502) the image of the eyeball state as an input, and using the position information as an output, to obtain a sight line calibrating model by training.

7. An apparatus for tracking a sight line, comprising:
a first acquiring module (601) configured to acquire a first image, wherein the first image is an image of an eyeball state of a driver; and
a first determining module (602) configured to determine, based on a pre-trained sight line calibrating model, a gaze area in a world coordinate system, the gaze area corresponding to the first image.

8. The apparatus according to claim 7, wherein the first determining module comprises:
an input submodule configured to input the first image into the pre-trained sight line calibrating model to obtain a direction of a sight line corresponding to the first image; and
a determining submodule configured to determine the gaze area in the world coordinate system, the gaze area corresponding to the direction of the sight line.

9. The apparatus according to any one of claims 7 to 8, further comprising:
a second acquiring module configured to acquire a second image, wherein the second image is an image of a surrounding environment of a vehicle of the driver; and
a second determining module configured to determine a second target area in the second image, the second target area corresponding to the gaze area, based on a corresponding relationship between the world coordinate system and an image coordinate system corresponding to the second image.

10. The apparatus according to claim 9, wherein the apparatus further comprises:
a third determining module configured to determine an object of point of interest (POI) in the second target area; and
a fourth determining module configured to determine, based on a corresponding relationship between the image coordinate system and a display coordinate system corresponding to a head up display screen, a target display position of the object of POI on the head up display screen.

11. The apparatus according to claim 10, wherein the apparatus further comprises:
a third acquiring module configured to acquire information of a current position of the vehicle;
a fourth acquiring module configured to acquire attribute information of the object of POI based on the information of the current position; and
a display module configured to superimposedly display the attribute information on the object of POI on the head up display screen.

12. An apparatus for training a model, comprising:
a fifth acquiring module (701) configured to acquire a training sample set, wherein a training sample in the training sample set comprises an image of an eyeball state of a driver when the driver looks at a label point, and position information of the label point; and
a training module (702) configured to use the image of the eyeball state as an input, and use the position information as an output, to obtain a sight line calibrating model by training.

13. A terminal device, comprising:
at least one processor; and
a memory communicatively connected to the at least one processor; wherein
the memory stores instructions executable by the at least one processor, and the instructions, when executed by the at least one processor, cause the at least one processor to execute the method according to any one of claims 1-5.

14. A non-transitory computer-readable storage medium storing computer instructions, wherein the computer instructions cause the computer to execute the method according to any one of claims 1-5.

15. A computer program product, comprising a computer program, wherein the computer program, when executed by a processor, implements the method according to any one of claims 1 to 5.
